# DEMANDE DE BREVET EUROPEEN

(11) **EP 0 608 645 A1**
(43) Date de publication de la demande: **03.08.1994**
(21) Numéro de dépôt: 93400233.8
(22) Date de dépôt: 29.01.1993
(51) Int. Cl.: G01L 1/24

(54) **Perfectionnements aux dispositifs d'appui pour charges lourdes et aux ouvrages équipés de tels dispositifs**

(71) Demandeur: FREYSSINET INTERNATIONAL et COMPAGNIE, F-13008 Marseille (FR); ETAT FRANCAIS - LABORATOIRE CENTRAL DES PONTS ET CHAUSSEES, F-75732 Paris Cédex 15 (FR)
(72) Inventeur: Chabert, Alain, F-92160 Antony (FR); Caussignac, Jean-Marie, F-94170 Le Perreux/Marne (FR); Morel, Gérard, F-92400 Courbevoie (FR); Seantier, Jacky, F-28210 Nogent Le Roi (FR); Rogez, Pierre, F-71000 Macon (FR)
(74) Mandataire: Jacquelin, Marc-Henri

(57) **Abrégé**

Il s'agit d'un plot d'appui (1) pour charge lourde (2), comprenant un corps élastiquement déformable (5). Ce plot est associé à au moins deux fibres optiques (6) comprenant respectivement deux tronçons (6₁) noyés dans ledit corps, tronçons enveloppés chacun par une gaine mécaniquement résistante, à des moyens (9) pour envoyer de la lumière dans chaque fibre et à des moyens (9) pour analyser la lumière sortant de chaque fibre de façon à en déduire la pression moyenne exercée transversalement sur le tronçon, de cette fibre, noyé dans le corps.

## Description

L'invention est relative aux dispositifs d'appui pour les charges lourdes exerçant une pression élevée selon une direction donnée sur leurs supports, dispositifs comprenant un plot en matériau élastiquement déformable interposé selon ladite direction entre la charge et son support.

Elle vise plus particulièrement, parmi ces dispositifs, ceux qui comprennent en outre une fibre optique dont un tronçon, enveloppé par une gaine mécaniquement résistante et choisi de façon telle que toute variation de la pression "transversale" appliquée sur lui se traduise par une variation de l'une au moins des caractéristiques de la lumière qui le traverse, est noyé jointivement dans le plot de façon à s'étendre selon un plan perpendiculaire à la direction ci-dessus, des moyens pour envoyer de la lumière dans la fibre et des moyens pour analyser la lumière sortant de la fibre de façon à en déduire la valeur moyenne de la pression "transversale" exercée sur son tronçon par la charge.

Dans les modes de réalisation connus de ces dispositifs d'appui, le tronçon de fibre noyé jointivement dans le plot et soumis à des variations de la pression transversale est unique et, même si ce tronçon est associé à un tronçon de fibre optique de référence, la construction qui en résulte permet de détecter une telle variation de pression uniquement en une zone intérieure unique du plot (voir le document WO-A-88 05529).

L'instrument qui en résulte peut présenter de l'intérêt, par exemple pour détecter les passages de véhicules automobiles sur le plot qu'il comporte.

Mais il ne permet pas de détecter instantanément les formes des éventuelles déformations subies par ledit plot, notamment en cisaillement.

Or, une telle information peut se révéler extrêmement précieuse.

La connaissance de l'évolution de certaines déformations de la charge lourde prenant appui sur le plot permet en effet de prévoir la survenance de graves désordres et de décider à temps des traitements de prévention.

L'invention a pour but, surtout, de rendre les dispositifs d'appui considérés tels qu'ils répondent mieux que jusqu'à ce jour aux différentes exigences de la pratique, notamment en ce qu'ils permettent de fournir des informations localisées en plusieurs points des plots concernés, ce qui rend possible, notamment par la multiplication de ces plots, une connaissance précise des déformations des charges lourdes supportées par lesdits plots selon les différentes directions possibles pour ces déformations.

A cet effet, les dispositifs d'appui du genre en question selon l'invention sont essentiellement caractérisés en ce qu'ils comprennent, en plus de la fibre optique ci-dessus définie, au moins une autre fibre optique répondant aux mêmes définitions que la première, affectées au même plot, et associée à des moyens semblables, les différents tronçons de fibres noyés jointivement dans ledit plot étant localisés respectivement en des zones, de ce plot, dans lesquelles les variations de la pression "transversale" au cours du temps sont susceptibles de différer les unes des autres, et les moyens associés aux différentes fibres permettant de connaître l'évolution dans le temps des variations en question au niveau des différents tronçons de fibres considérés.

Dans des modes de réalisation préférés, on a recours en outre à l'une et/ou à l'autre des dispositions suivantes :
- le dispositif d'appui comprend trois tronçons de fibres optiques tels que définis ci-dessus, rectilignes, parallèles et de longueurs identiques, ces trois tronçons étant disposés, au sein du même plot, dans un même plan perpendiculaire à la direction d'application de la pression "transversale" due à la charge lourde,
- le dispositif d'appui selon l'alinéa précédent comprend dans un même plot deux jeux constitués chacun par trois tronçons de fibres optiques tels que définis ci-dessus, rectilignes, parallèles et de longueurs identiques, les plans dans lesquels s'étendent les tronçons des deux jeux étant respectivement parallèles entre eux et les directions selon lesquelles s'étendent les tronçons de fibres qui correspondent aux deux jeux étant croisées entre elles.

L'invention vise également les plots "instrumentés" contenant des tronçons de fibres optiques tels que définis ci-dessus, ainsi que les charges lourdes, et notamment les ouvrages d'art, bâtiments et autres constructions, équipés de tels plots.

Pour ce qui est de ces charges lourdes ou ouvrages prenant appui contre une pluralité de plots du genre ci-dessus, ils sont essentiellement caractérisés selon l'invention en ce que les tronçons de fibres optiques noyés dans ces plots sont répartis de façon telle que les informations recueillies sur leurs pressions transversales moyennes respectives permettent de déduire les principales déformations possibles de l'ouvrage et en particulier celles dues à ses contractions ou dilatations ainsi qu'à ses basculements ou pivotements.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, est une vue schématique latérale d'un pont prenant appui contre une pluralité de plots élastiquement déformables conformes à l'invention.

La figure 2 est une coupe verticale transversale du même pont selon II-II, figure 1.

La figure 3 montre en coupe verticale une portion d'un plot établi selon l'invention.

La figure 4 est une variante de la figure 3.

La figure 5 est une coupe verticale d'un plot établi selon l'invention.

La figure 6 est une variante de la figure 5.

Les figures 7, 8 et 9 montrent schématiquement une portion d'ouvrage d'art équipée d'un plot conforme à l'invention, respectivement en un état de repos normal, en un état déductible du précédent par une translation horizontale faisant travailler le plot au cisaillement, et en un état déductible du premier par un affaissement pivotant du support correspondant.

La figure 10 est un graphique faisant apparaître les variations des pressions transversales exercées sur les fibres optiques équipant le plot des figure 7, 8 et 9 au cours des déformations de ce dernier.

Les plots élastiquement déformables 1 ici considérés sont destinés à servir d'appuis à des charges lourdes 2 telles que notamment des ouvrages d'art, des bâtiments..., ces plots étant à cet effet interposés entre lesdites charges et des supports ou embases 3.

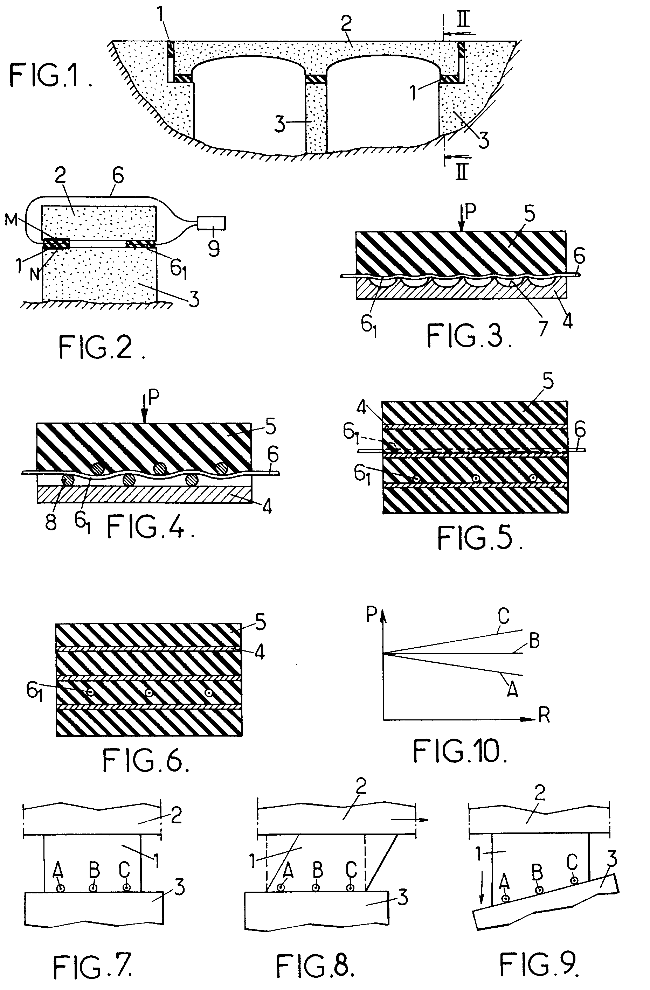

On a supposé à titre d'exemple sur les figures 1 et 2 que ladite charge 2 est un pont en béton armé.

Les appuis en question peuvent aussi bien servir de supports verticaux que de butées horizontales, comme visible en haut de la figure 1, ou encore que de butées obliques ou autres.

Pour simplifier et à titre bien entendu non limitatif, on supposera dans ce qui suit que les appuis 1 considérés sont interposés verticalement entre la charge 2 et l'embase 3.

Chaque plot comprend un corps 5 en matériau élastiquement déformable délimité verticalement par deux faces planes horizontales et destiné à être interposé entre deux portées planes horizontales et rigides M et N (figure 2) liées respectivement à l'embase 3 et à la charge 2.

Dans les modes de réalisation préférés illustrés, le corps 5 est en caoutchouc et il est armé par des frettes métalliques planes et horizontales 4 qui le décomposent en une pluralité de couches superposées, lesdites couches étant adhérées sur lesdites frettes par vulcanisation.

On prévoit en outre au moins deux fibres optiques 6 comprenant chacune un tronçon 6₁ noyé dans le corps 5.

Pour que les tronçons 6₁ puissent être noyés dans le corps 5 au cours de sa formation, il convient qu'ils résistent aux températures et pressions de la vulcanisation.

Ils sont à cet effet entourés par des gaines suffisamment résistantes, notamment en polyimide.

Chaque tronçon de fibre 6₁ est choisi et/ou agencé de façon telle que certaines au moins des variations de la pression transversale P appliquée sur lui se traduisent par des variations de l'une au moins des caractéristiques de la lumière qui le traverse.

La caractéristique en question peut être la polarisation de la lumière si la fibre optique considérée est d'un type monomode, cas dans lequel les tronçons 6₁ peuvent être éloignés des frettes 4 (voir figure 6), les pressions transversales exercées sur la fibre pouvant être alors orientées selon l'une quelconque des directions radiales.

Si la fibre optique est d'un type multimode, il convient de l'agencer de façon telle que les variations de pression transversale à détecter se traduisent par la formation dans cette fibre de microcourbures plus ou moins accentuées.

Dans un tel cas, en effet, on observe des déperditions de la lumière lors de sa traversée des portions microcourbées, déperditions qui sont d'autant plus importantes que les microcourbures sont plus accentuées.

La caractéristique de la lumière qui est à détecter et mesurer pour pouvoir obtenir une information sur les variations de pression du plot est alors l'atténuation de cette lumière lors de sa traversée de la portion microcourbée.

Plusieurs modes de réalisation de telles microcourbures peuvent être envisagés, qui impliquent chacun une application du tronçon de fibre 6₁ concerné contre l'une des frettes 4, les pressions P alors détectables étant celles appliquées sur ledit tronçon perpendiculairement à ladite frette.

Dans le mode de réalisation schématisé sur la figure 3, on grave dans l'une des frettes 4 des stries 7 et l'on applique le tronçon de fibre 6₁ concerné contre lesdites stries, en travers de celles-ci, entre ces dernières et la couche d'élastomère 5.

Dans le mode de réalisation schématisé sur la figure 4, le tronçon de fibre 6₁ appliqué contre une frette 4, entre cette frette et la couche d'élastomère 5, est entouré par un fil 8 de matériau dur enroulé en hélice autour de lui.

Chaque fibre 6 est reliée à un poste extérieur 9 comprenant :
- des moyens pour envoyer un faisceau lumineux dans la fibre et en particulier dans son tronçon 6₁,
- des moyens pour recueillir le faisceau lumineux sortant de ladite fibre,
- et des moyens pour comparer les deux faiceaux entrant et sortant de façon à en déduire les variations de la pression moyenne P appliquée transversalement sur le tronçon 6₁.

La portion, de chaque fibre 6, qui conduit les faisceaux lumineux à l'entrée du tronçon 6₁ et celle qui recueille les faisceaux lumineux à la sortie de ce tronçon peuvent être distinctes.

Selon une variante intéressante connue en soi, les deux portions en question sont confondues en une seule, et chaque faisceau lumineux envoyé dans un tronçon 6₁ parcourt ce dernier successivement dans un premier sens, puis en sens inverse après rétroréflexion sur un miroir approprié disposé à l'extrémité, dudit tronçon, la plus éloignée de son extrémité connectée à la portion restante de la fibre 6 : c'est cette variante qui a été schématisée sur la figure 2.

Le poste 9 peut comprendre des moyens pour afficher directement en clair les pressions ou variations de pression ainsi mesurées.

Les deux tronçons de fibre 6₁ noyés dans une même couche d'élastomère 5 sont généralement rectilignes, parallèles entre eux et disposés dans un même plan parallèle aux frettes 4.

Mais un tel dessin n'est pas limitatif et les tronçons 6₁ pourraient par exemple s'étendre au moins en partie selon un arc de cercle d'axe vertical, notamment si le contour horizontal du plot est circulaire, l'axe dudit cercle étant alors l'axe dudit plot.

Bien entendu, les deux tronçons de fibres noyés dans la même couche 5 sont disposés en deux endroits, de cette couche, dans lesquels les variations de pression "transversale" (c'est-à-dire susceptibles de se traduire par des variations du serrage transversal desdits tronçons) sont susceptibles de différer.

Les informations recueillies respectivement à l'aide de ces deux tronçons 6₁ permettent ainsi de connaître non seulement les variations de charge verticale imposées au plot 1, mais aussi les variations de répartition de ces charges au sein du plot lui-même.

Ces variations permettent de déterminer non seulement les déformations verticales du plot, mais aussi les autres déformations de celui-ci et en particulier ses déformations faisant intervenir un cisaillement horizontal ou un basculement.

Ce type d'information est donné d'une façon plus complète encore lorsque le nombre des tronçons de fibres 6₁ noyées dans la couche d'élastomère 5 est supérieur à deux, et en particulier égal à trois, ainsi que schématisé sur les figures 5 à 9.

Les trois figures 7, 8 et 9 montrent respectivement les formes prises par le plot 1 :
- initialement au repos (figure 7),
- dans une position déduite de la précédente par un déplacement horizontal vers la droite de la charge lourde 1, ce qui fait travailler le plot au cisaillement horizontal (figure 8),
- et dans un état déductible du premier par un affaissement pivotant de l'embase 3 (figure 9).

La figure 10 est un schéma qui montre l'évolution des pressions exercées, lors des cisaillements schématisés sur les figures 7 et 8, sur les trois tronçons de fibres A, B et C, qui s'échelonnent de gauche à droite sur lesdites figures 7 et 8.

Sur cette figure 10, on a porté :
- en abscisses, les efforts de cisaillement R exercés sur le plot 1 ou, ce qui revient au même, les déplacements horizontaux relatifs entre la charge lourde 2 et l'embase de support 3,
- et en ordonnées, les pressions P exercées sur le tronçon de fibre considéré ou, ce qui revient au même, le paramètre représentatif de ces pressions, paramètre tel que l'atténuation lumineuse dans le cas où l'on exploite les variations des microcourbures de la fibre,

la charge exercée verticalement sur le plot 1 étant supposée constante.

On voit que, dans ces conditions, lorsque l'effort de cisaillement augmente, la pression moyenne exercée sur le tronçon de fibre central B demeure constante alors que la pression moyenne exercée sur le tronçon de fibre A de gauche diminue et que c'est l'inverse pour le tronçon de fibre C de droite.

On peut noter que des variations sensiblement identiques à celles observées ci-dessus découleraient d'une déformation du genre de celle schématisée sur la figure 9.

La connaissance globale de l'ouvrage 2 permet au technicien de savoir de laquelle, de ces déformations possibles, il s'agit réellement.

On comprend aisément que la multiplication de telles nappes de tronçons de fibres dans les différents plots utilisés pour les appuis d'un même ouvrage permet de connaître avec précision les différentes déformations subies par ledit ouvrage ainsi que leurs amplitudes, et ce dans toutes les directions selon lesquelles de telles déformations sont susceptibles de se produire.

En particulier, il est très avantageux de noyer dans un même plot des nappes croisées de tronçons de fibres optiques 6₁, ces nappes étant notamment appliquées respectivement contre les faces supérieures de deux frettes consécutives 4 d'un même plot ainsi que visible sur la figure 5.

Les fibres de ces deux nappes permettent de renseigner les techniciens sur les basculements éventuels du plot concerné selon deux directions horizontales perpendiculaires entre elles.

En suite de quoi, et quel que soit le mode de réalisation adopté, on obtient finalement des plots d'appui élastiquement déformables pour charges lourdes qui sont instrumentés de façon à fournir des indications précises sur les variations locales des pressions auxquelles ils sont soumis et donc sur leurs déformations propres et celles de la charge lourde prenant appui sur eux.

Ces plots présentent de nombreux avantages par rapport à ceux antérieurement connus, en particulier les suivants :
- la présence des tronçons de fibres optiques au sein de ceux-ci prend si peu de place que les volumes, formes générales et performances desdits plots, ne sont absolument pas modifiés par cette présence,
- la connaissance des déformations localisées des plots peut être connue avec une grande précision.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le corps élastiquement déformable serait constitué, non pas par un élément en élastomère vulcanisé, mais par un élément en tout autre matériau élastiquement déformable moulé ou coulé tel que notamment le polytétrafluoroéthylène,
- et celles où les portées planes M et M entre lesquelles est interposé le plot auraient une forme autre qu'un rectangle ou qu'un cercle, par exemple celle d'un anneau.

## Revendications

1. Dispositif d'appui pour une charge lourde (2) exerçant une pression élevée selon une direction donnée sur un support (3), comprenant un plot en matériau élastiquement déformable (5) interposé selon ladite direction entre la charge et son support, une première fibre optique (6) dont un tronçon (6₁), enveloppé par une gaine mécaniquement résistante et choisi de façon telle que toute variation de la pression "transversale" appliquée sur lui se traduise par une variation de l'une au moins des caractéristiques de la lumière qui le traverse, est noyé jointivement dans le plot de façon à s'étendre selon un plan perpendiculaire à la direction ci-dessus, des moyens (9) pour envoyer de la lumière dans la fibre et des moyens (9) pour analyser la lumière sortant de la fibre de façon à en déduire la valeur moyenne (P) de la pression "transversale" exercée sur son tronçon (6₁) par la charge, caractérisé en ce qu'il comprend au moins une autre fibre optique (6) répondant aux mêmes définitions que la première, affectées au même plot (5) et associée à des moyens semblables (9), les différents tronçons (6₁) de fibres noyés jointivement dans ledit plot étant localisés respectivement en des zones, de ce plot, dans lesquelles les variations de la pression "transversale" au cours du temps sont susceptibles de différer les unes des autres, et les moyens associés aux différentes fibres permettant de connaître l'évolution dans le temps des variations en question au niveau des différents tronçons de fibres considérés.

2. Dispositif d'appui selon la revendication 1, caractérisé en ce qu'il comprend trois tronçons de fibres optiques (6₁) tels que définis ci-dessus, rectilignes, parallèles et de longueurs identiques, ces trois tronçons étant disposés, au sein du plot (5), dans un même plan perpendiculaire à la direction d'application de la pression "transversale" due à la charge lourde (2).

3. Dispositif d'appui selon la revendication 2, caractérisé en ce qu'il comprend dans un même plot (5) deux jeux constitués chacun par trois tronçons de fibres optiques (6₁) tels que définis ci-dessus, rectilignes, parallèles et de longueurs identiques, les plans dans lesquels s'étendent les tronçons des deux jeux étant respectivement parallèles entre eux et les directions selon lesquelles s'étendent les tronçons de fibres qui correspondent aux deux jeux étant croisées entre elles.

4. Plot d'appui en matériau élastiquement déformable, caractérisé en ce qu'il comprend, noyés jointivement dans sa masse, au moins deux tronçons (6₁) de fibres optiques répondant aux définitions données dans l'une quelconque des revendications 1 à 3.

5. Charge lourde prenant appui contre une pluralité de plots selon la revendication 4, caractérisé en ce que les tronçons (6₁) de fibres optiques noyés dans ces plots (5) sont répartis de façon telle que les informations recueillies sur leurs pressions transversales moyennes respectives permettent de déduire les principales déformations possibles de la charge et en particulier celles dues à ses contractions ou dilatations ainsi qu'à ses basculements ou pivotements.
